Europäisches Patentamt

European Patent Office

Office européen des brevets

(11) Publication number: 0 377 202
A2

## (12) EUROPEAN PATENT APPLICATION

(21) Application number: 89123953.5

(22) Date of filing: 27.12.89

(51) Int. Cl.5: G01N 30/16

(30) Priority: 04.01.89 IT 1901589

(43) Date of publication of application:
11.07.90 Bulletin 90/28

(84) Designated Contracting States:
DE FR GB NL

(71) Applicant: CARLO ERBA STRUMENTAZIONE
S.p.A.
Casella Postale Aperta
I-20090 Rodano Milano(IT)

(72) Inventor: Andreolini, Franca
Via Corridoni 1
I-20063 Cernusco Sul Naviglio (Milano)(IT)
Inventor: Trisciani, Adriano
Via Marco Praga 22
I-20052 Monza (Milano)(IT)

(74) Representative: Marietti, Giuseppe
CENTRO DI CONSULENZA IN PROPRIETA'
INDUSTRIALE Viale Caldara, 43
I-20122 Milano(IT)

(54) Method and mixing device for small volumes.

(57) A mixing device for small volumes of fluids, particularly for microHPLC and SFC instrumentation, comprises a plurality of small disks piled up and provided with differently shaped openings in order to: unite into a single flow the fluids coming from several feeding ducts, subdivide said flow into a multiplicity of flows with lower flowrate, in at least two stages of subsequent and gradual subdivisions, generating a high turbulence, and unite again the flows thus formed into a single flow.

Preferably, the small disks are piled up in a package and the device includes more packages placed in series and interchangeable.

Fig.1

## METHOD AND MIXING DEVICE FOR SMALL VOLUMES

The present invention concerns a method and a device for mixing together two or more fluids.

More particular, by the invention concerns a method and a device to mix in an intimate and reproducible way two or more flows of fluids with flowrate in the order of few microliters per minute, such as for instance fluids used as eluents in high pressure liquid micro chromatography (micro HPLC) or those used in chromatography with supercritical fluids (SFC). In both cases, fluids are fed at a high pressure to the branches of a "T" or "cross" fitting, where they must be intimately and perfectly mixed before being sent to the analysis, the ratios between the feeding flowrates of the two fluids being possibly variable in time, to obtain a desired polarity gradient of the eluent.

Two types of fluid mixers are presently known: static mixers and dynamic mixers.

Dynamic mixers essentially consist of a mixing chamber to which fluids are fed and where a mixing means is present, generally constituted by a magnetic stirrer, which accurately and reproducibly performs mixing of the two liquids fed to the mixing chamber.

The more currently known static mixers essentially comprise glass or metal tubes of reduced size, containing balls, generally glass balls, packed in the tube to perform the required mixing.

The main disadvantage of these types of mixers lies in the fact that they cannot be used for small or very small volumes of fluid, such as those used for microHPLC analysis with microcolumns. In particular static mixers with balls-packed tube require a minimum dead volume of approximately 50 microliters, below which it is not possible to perform mixing providing reliable and reproducible results.

A first solution to said problem of reducing the mixer volume is provided by the device known as Visco-Jet -Micro-Mixer (registered trademark by Lee - U.S.A.). This device consists of a metal container which accomodates a disk bearing a plurality of micro spirals engraved thereon arranged in couples and communicating between one another. The fluids arriving in the mixing chamber are fed to said spirals in such a way that they follow a course which causes their alternate rotation along the spiral tracks, until they come out completely intermixed.

The disadvantages of this device are both technical and economic. Technical inconveniences derive from the fact that the need of engraving with high accuracy a very great number of spirals on the disk surface makes it difficult to reduce the device to such dimensions as to allow the treatment of volumes of the order of 1 - 2 microliters, instead of the 10 microliters constituting the volume of the present Visco-Jet devices. Of course these problems of technical nature negatively affect the cost of the device itself, cost which is already very high for the models manufactured at the present time.

Therefore, there is the need for a device to accurately and reproducibly mix two or more fluids, which may be simply and economically manufactured and may be used for mixing fluids with flowrates of the order of 1 - 5 microliters per minute.

An object of the present invention is therefore that of solving the above described problems by means of a method for the accurate and reproducible mixing of fluids with flow having very reduced flowrate.

Another object of the present invention is that of providing a device for mixing two or more fluids with flows having very reduced flowrate and eventually variable ratios, which, moreover, may be easily manufactured, with limited cost and allowing to obtain reliable and reproducible results.

These objects are achieved by means of the method and the device according to the invention, which allow to accurately and reproducibly mix two or more fluids with very reduced flowrate, such as for instance those used in analytical applications like microHPLC. More particularly the invention concerns a method for mixing two or more fluids, particularly in hydraulic systems with flows having very reduced flowrate, characterized in that it comprises the steps of: causing the flows coming from relevant feeding ducts to pass through a single passage to unite said flows into a single flow; subdividing said flow into a plurality of flows, each having much lower flowrate than said first flow, in at least two subsequent and gradual stages of subdivision, simultaneously generating a high turbulence; uniting again said plurality of flows into a single flow.

The invention also concerns a device for mixing two or more fluids, particularly in hydraulic systems with flows having very reduced flowrate, characterized in that it comprises: a structure acting as container which houses the ends of the fluids feeding ducts and of the mixture outlet; means to unite said fluids into a single flow; means to subdivide said flow into a first plurality of flows, each having much lower flowrate than said first flow; means to subdivide said plurality of flows into at least one subsequent multiplicity of flows, each having much lower flowrate than each flow of said first plurality; and means to unite again the flows into a single flow.

The invention will be now described more in detail with reference to the accompanying drawings given with illustrative and non limiting purposes, charcterized in that:

- figure 1 is a schematic sectional view of a possible embodiment of a device according to the invention;

- figure 2 is a schematic perspective and exploded view of a plurality of elements of the device of figure 1;

- figure 3 is a perspective and exploded view of an embodiment alternative to that of figure 2;

- figure 4 is a perspective view of the device elements as alternative to those of figures 2 and 3;

- figure 5 is a graph showing the good quality of mixing obtained by a device according to the invention.

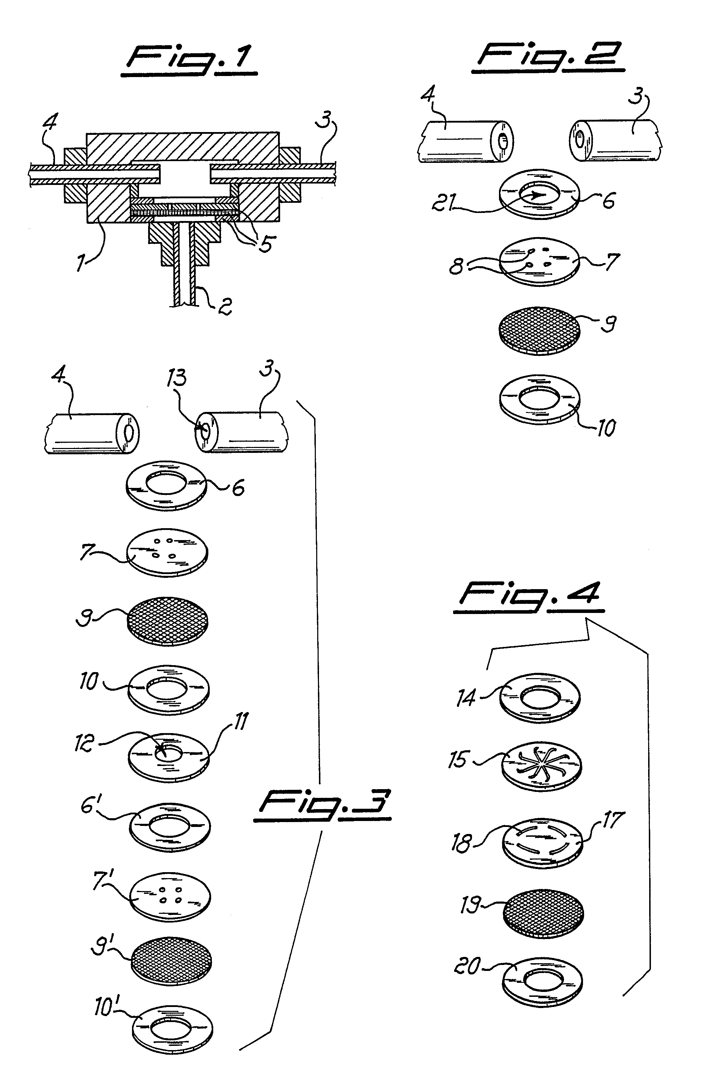

With reference to figure 1, the device according to the present invention comprises a metal container 1 having a traditional "T" or "cross" shape and comprising, in this example, two different inlets for feeding ducts 3 and 4 of the fluids to be mixed, and an outlet for a duct 2 conveying the mixed fluids to the chromatographic system. Inside said container and in correspondence with the face-to-face outlets of ducts 3 and 4, there is provided a plurality of substantially plate-shaped elements 5 which form the real mixing portion of the device.

The elements 5 are provided with a plurality of openings through which the fluids under pressure coming from the feeding ducts are caused to pass until intimately mixed. As it will be illustrated more in detail with reference to figure 2, the substantially plate-shaped elements 5 comprise, in sequence, means to unite into a single flow the flows of the fluids coming from the feeding ducts 3 and 4 and means to subdivide, in at least two different and gradual stages, the flow coming from said first means into a multiplicity of microscopic flows, each having much lower flowrate than that of said first flow. Finally there are provided means to unite again the thus obtained flows into a single flow.

Preferably the plate elements are disk-shaped as illustrated in figure 2. More particularly, in the embodiment of figure 2, said means to unite flowrates into a single flow consist of a disk 6 provided with a concentric hole 21, namely of a washer charcterized in that the diameter of the open section is approximately 3/5 of the diameter of the disk itself. The disk 6 is superimposed to means to perform the subdivision of the flow outcoming from said disk 6; said means consist of a second disk 7, provided with four holes 8 to subdivide the flow, each hole having a size approximately 1/10 of the diameter of the disk itself. Preferably said holes are provided in correspondence to the concentric hole 21.

Downstream the disk 7 having said four holes 8, there is a disk 9 constituting means by which the flows coming from each hole 8 of disk 7 are furtherly subdivided into a plurality of microscopic flows. Said subdivision is obtained by causing the flows coming from disk 7 to pass through the meshes of a subsequent disk 9, the mesh size ranging from approximately 5 microns to approximately 10 microns according to the type of disk used. The flows coming from the disk 9, having therefore such reduced dimensions as to be like a very fine dispersion of the liquid coming from the disk 7, are again united to form a single flow, thanks to a washer 10 positioned downstream of the mesh disk 9 and completely similar to the previously described washer 6.

Preferably the disks forming the mixing unit are piled up on one another and put together to form a "package" in a seat of the container having the same diameter as that of the disks themselves to avoid by-pass. It is therefore possible to envisage the use of more packages placed in series so as to obtain a mixing device with desired length and volume; by using pre-arranged packages, these are interchangeable between one another and may be replaced in case obstructions or leakage occur.

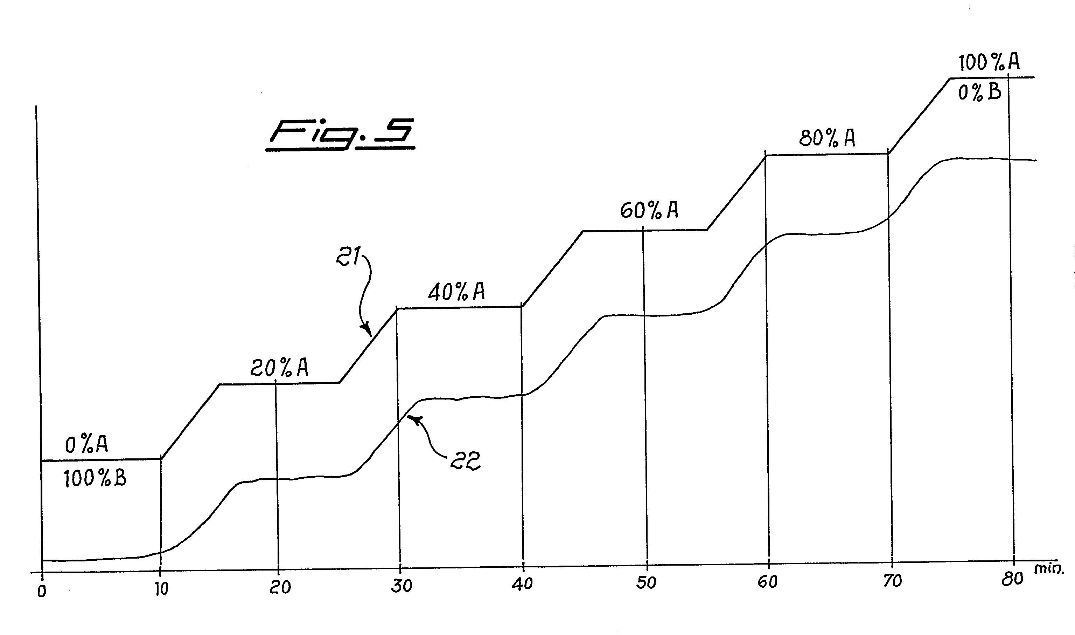

As better shown in figure 3, when two packages placed in series are used, each mixing package (except the first one) is provided with another disk-element 11 which has a hole 12 for the passage of the flow having similar diameter as that of the hole 13 of the fluid feeding ducts.

In sequence, downstream of the hole 11, there are provided elements 6', 7', 9', 10', which have substantially the same characteristics as those of the relevant elements 6, 7, 9, 10 present in the first mixing package, the only difference being in the mesh size of the wire gauze disk 9', which in this case is approximately 0,45 microns.

Of course it is possible to envisage a number of variants in the shape of the holes provided in the disk- elements 5, without escaping from the scope of the present invention. For example, as shown in figure 4, below the washer 14, similar to washers 6 and 6' of figure 3, there is a disk 15 provided with through-slits 16 having spiral track. Downstream of disk 15 there is positioned another disk 17, charcterized in that openings 18 are designed to follow a circumference arc, and which is followed by a disk 19 with a mesh structure similar, for instance, to that of disk 9'. The presence of a wire gauze or mesh disk has actually proved to be essential to assure optimal mixing of the fluids. In this case, too, there is a last disk 20, similar to disks 10 and 10' of figure 3, serving to unite again the flows coming from the mesh disk 19 into a single flow.

During operation, the two fluids coming from the feeding ducts 3 and 4, consisting of liquids under pressure or fluids in supercritical conditions, are first of all conveyed to the element 6 so as to form a first single flow with flowrate equal to the sum of the flowrates of the single fluids. The flow coming from element 6 passes through the holes 8 provided in the following disk 7, which subdivide it into four single flows, each therefore presenting a flowrate of approximately one quarter of the flowrate of the flow coming from element 6. Each one of the single flows coming from disk 7 is on its turn subdivided into a plurality of micro-flows thanks to the mesh disk 9. Considering that the mesh size of disk 9 may range betweeen approximately 0.4 and approximately 10 microns, it is easily understandable that the subdivision of the four flows coming from the element 7 into a plurality of microscopic flows results in an aerosol rather than a true subdivision into single flows, mainly because of the high turbulence occurring during said subdivision under pressure. The flows coming from disk 9 are combined again and conveyed to the mixing package outlet of the washer 10, having absolutely analogous size as that of the element 6.

In the case of more packages placed in series, the flow coming from the first package is firstly caused to pass through the element 11, which has a through-hole with analogous section as that of the passage of the feeding ducts upstream the first package.

The procedure is then repeated with minimal variants due to the possible presence of additional disks or disks with other shapes than those of the disks of the first package. At the device outlet, the flow obtained presents a complete and above all repeatable mixing of the incoming fluids. Moreover, thanks to the reduced dimensions of the disks, the device dead volume is practically zero and the polarity gradient of the eluent programmed for the analysis results to be perfectly reproducible in time. The disks are preferably made of steel 316 and for analytical chemistry applications the preferred dimensions of each disk are 1/10 of millimeter in thickness with a diameter of approximately 5 millimeters. A base unit consisting of 5 disks of this type has a volume of two microliters and is therefore particularly suitable in HPLC analysis with microcolumns requiring a flow in the order of 1-2 microliters per minute.

Figure 5 shows a graph reporting the UV absorption curve in time at 260 nm of a water/acetone mixture ($H_{29}/CH_3COCH_3$) coming from a device according to the invention.

Said mixture presents variable concentrations in acetone and is obtained by varying the ratio between a first solvent B, consisting of $H_2O$ alone, and a second solvent A, consisting of water containing 1% acetone, so as to pass from a flow with a composition equal to 0% of A to one equal to 100% of A. The flowrate of said flow was equal to 2 microliters per minute.

For a better evaluation of the curve 22 thus obtained, figure 5 reports the curve 21 as well, which shows the theoretical course of the absorption of said mixture. As it can be noticed the actual curve 22 complies with the theoretical one 21, and the absence of considerable fluctuations confirms therefore the good quality of mixing obtained by means of the device according to the invention.

## Claims

1. A method for mixing two or more fluids, particularly in hydraulic systems with flows having very reduced flowrate, characterized in that it comprises the steps of: uniting the flows coming from the relevant ducts into a single flow; subdividing said flow into a plurality of flows each having much lower flowrate than the previous flow, in at least two subsequent and gradual stages of subdivision, generating high turbulence; uniting again said plurality of flows into a single flow.

2. A method according to claim 1, characterized in that said sequence of stages of flow combination and subdivision is repeatedly performed.

3. A method according to claim 2, characterized in that said flow is caused to pass, before each new sequence, through an element with a through-section similar that of said feeding ducts of the fluids.

4. A method according to claim 1, 2 or 3, characterized in that said stages of combination and subdivision are performed by causing the fluids to pass through a plurality of substantially plate-shaped elements, piled up on one another and provided with passages having different sections.

5. A device for mixing two or more fluids, particularly in hydraulic systems with flows having very reduced flowrate, characterized in that it comprises a structure acting as a container housing the ends of the fluids feeding ducts and of mixture outlet; means to unite said fluids into a single flow; means to subdivide said flow into a first plurality of flows, each with much lower flowrate than said first flow; means to subdivide said first plurality of flows into at least one subsequent multiplicity of flows, each with much lower flowrate than that of any flow of said first plurality; and means to unite again the flows into a single flow, said means being all housed within said container.

6. A device according to claim 5, characterized in that said flow combination and subdivision means consist of a plurality of substantially plate-shaped elements, piled up on one another and provided having passages with different sections.

7. A device according to claims 5 and 6, charcterized in that said means to unite the fluids consist of a disk provided with a concentric hole for the fluid passage having a diameter equal to approximately 3/5 of the disk diameter.

8. A device according to one of claims 5 to 7, charcterized in that said means to subdivide the flow into a first plurality of flows consist of a disk provided with at least three through-holes for the flow, each hole having diameter equal to approximately 1/10 of the disk diameter.

9. A device according to one of claims from 5 to 7, charcterized in that said means to subdivide the flow into a first plurality of flows consist of one or more disks with openings in the form of shaped slits.

10. A device according to claim 9, characterized in that it comprises a first disk with spiral-shaped slits and a second disk with circumferentially arranged slits.

11. A device according to one of claims 5 to 10, whrein said means to subdivide said first plurality of flows into another multiplicity of flows consist of a wire gauze with mesh size ranging between 0,4 and 20 microns.

12. A device according to one of claims 5 to 11, charcterized in that said means to unite again the subdivided flows into a single flow consist of a disk provided with a concentric through hole having a diameter equal approximately to 3/5 of the disk diameter.

13. A device according to one of claims 5 to 12, charcterized in that said disks provided with holes to obtain a single flow, the first subdivision of the flow, the second subdivision of the flow and the final combination into a single flow, are superimposed to form a single unit or mixing package.

14. A device according to claim 13, characterized in that more mixing packages are placed in series, and in that each mixing package following the first one is provided with a further element with a section for the flow passage similar to that of said fluid feeding ducts, said further element being positioned in correspondence with the flow inlet to said mixing package.

15. A device according to claim 13 or claim 14, charcterized in that each mixing package is provided with at least a wire gauze disk or similar element of flow subdivision.

*Fig.1*

*Fig.2*

*Fig.3*

*Fig.4*

*Fig.5*

100%A
0%B

80%A

60%A

40%A

21

20%A

0%A
100%B

22

EP 0 377 202 A2

min.

0    10    20    30    40    50    60    70    80